# EUROPEAN PATENT APPLICATION

(11) **EP 1 339 053 A1**
(43) Date of publication of application: **27.08.2003**
(21) Application number: 03250996.0
(22) Date of filing: 19.02.2003
(51) Int. Cl.: G11B 7/125

(54) **Optical power level-controlling device for reduced reproduction jitter**

(30) Priority: 21.02.2002 JP 2001044511
(71) Applicant: Mitsumi Electric Co., Ltd., Tama-Shi, Tokyo (JP)
(72) Inventor: Maekawa, Yuichi, Mitsumi Electric Co Ltd, Tama-shi, Tokyo (JP)
(74) Representative: Midgley, Jonathan Lee

(57) **Abstract**

An optical power level-controlling device (10) controls optical power level, such as a first reference level, a higher second level and a higher third level, of a laser beam irradiated on an optical disk. A table is created which contains second level indication data (difference between the second and first levels) for each of the second levels varied in a stepped manner and third level indication data (difference between the third and second levels) for each of ratios of the second level indication data to the third level indication data, the ratio being varied in a stepped manner. Optimum second level and optimum ratio for an optical disk are determined based on product information read from the optical disk.
A second level and a ratio to be used for controlling an optical power level are retrieved from the table using the optimum second level and the optimum ratio.

## Description

### BACKGROUND OF THE INVENTION

### 1. Field of the Invention

The present invention relates to an optical power level-controlling device and more particularly to an optical power level-controlling device of an optical disk device capable of recording data on a recordable optical disk.

### 2. Description of the Related Art

Recordable optical disks may generally be categorized into write-once read-many optical disks such as CD-R and rewritable optical disks such as CD-RW.

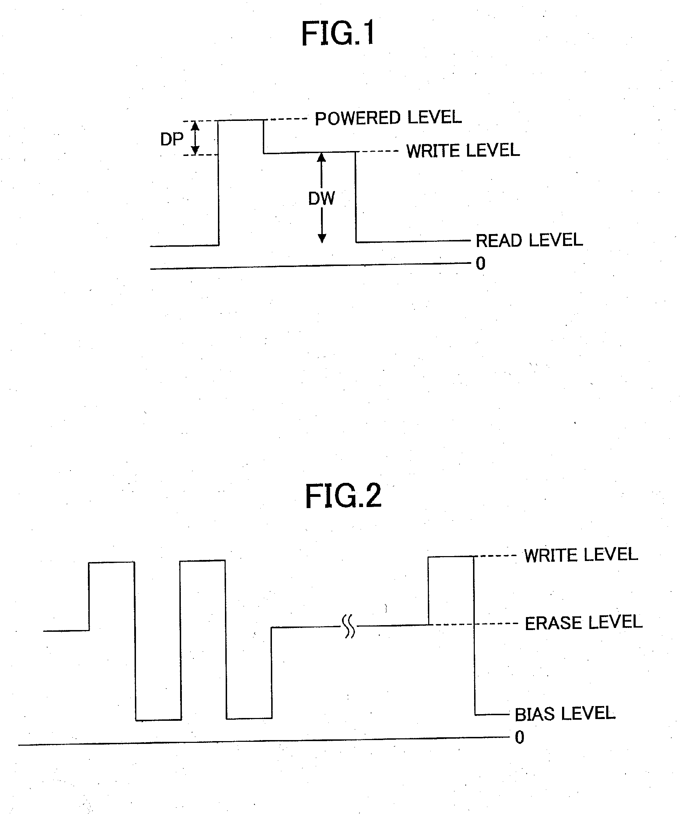

Fig. 1 illustrates optical power level of a laser beam used for recording data on a CD-R. In the following text, terms "power level" and "level" are understood to mean "optical power level". As can be seen in Fig. 1, READ level is the reference level and WRITE level is added on READ level. Further, POWERED level is provided for a predetermined period of time (e.g., 1T to 1.5T, where T represents a cycle at a normal speed (x1) and is approximately 236 nsec for frequency 4.32 MHz) at the beginning of WRITE level. POWERED level is used to take into account of the fact that temperature of the optical disk may be still immediately after initiation of irradiation of the laser beam and will rise as time elapses. That is, POWERED level is provided for giving a sharp increase of the temperature of the disk so as to form pits of a constant width.

Fig. 2 illustrates optical power level of a laser beam used for writing data on a CD-RW. As can be seen in Fig. 2, power level is varied between two values, i.e., WRITE level and ERASE level with BIAS level being the reference level. In such a case, the laser beam at WRITE level causes a change of state of the recording layer of the optical disk from crystalline to amorphous, thereby forming marks on the optical disk. The laser beam at ERASE level causes a change of state of the recording layer of the optical disk from amorphous to crystalline, thereby erasing recorded marks.

The optical disk device of the related art operates such that, during a recording operation of the CD-R, power level of the laser beam is detected by means of a front monitor to perform feedback control on READ level and WRITE level. However, feedback control is not performed on POWERED level since the duration of POWERED level is shorter than a response time of the front monitor. POWERED level is controlled in such a manner that a ratio DW/DP of the difference between WRITE level and READ level (DW) to the difference between POWERED level and WRITE level (DP) is kept constant.

However, the optimum value of the above-mentioned ratio DW/DP may vary within a range of approximately 10% to 15% due to differences between recording characteristics of optical disks supplied from various manufacturers. Therefore, in the related art, the selected POWERED level may not be optimum for some types of optical disks and this may cause increased jitter during reproduction of the optical disks.

Also, POWERED level may not be optimum during a recording operation of CD-RW. If recording speed is low, power level of the laser beam can be detected by means of a front monitor to perform a feedback control on WRITE level and ERASE level. However, as the recording speed becomes higher, WRITE level duration becomes shorter as compared to the response time from the front monitor. Thus, an optimum value should be selected for the ratio of the difference between ERASE level and BIAS level to the difference between WRITE level and ERASE level. Again, the optimum value for the above-mentioned ratio may differ due to differences between recording characteristics of the optical disks. Therefore, depending on the type of optical disk, there may be a case where POWERED level is not set at its optimum value. This may cause increased jitter during reproduction of the optical disks.

### SUMMARY OF THE INVENTION

Accordingly, it is a general object of the present invention to provide an optical power level-controlling device that can obviate the problems described above.

It is another and more specific object of the present invention to provide an optical power level-controlling device that can reduce jitter during reproduction of optical disks.

In order to achieve the above objects according to the present invention, an optical power level-controlling device for controlling optical power level of a laser beam emitted from a light-emitting element and irradiated on an optical disk includes a table-creating part, an optimum value-determining part and a retrieving part. The optical power level may take a first level defined as a reference level, a second level higher than the first level and a third level higher than the second level. A second level indication data is defined as a difference between the second level and the first level and a third level indication data is defined as a difference between the third level and the second level. The table-creating part creates a table containing second level indication data for each of the second levels varied in a stepped manner and containing third level indication data for each of ratios of the second level indication data to the third level indication data, the ratio being varied in a stepped manner. The optimum value-determining part determines an optimum second level and an optimum ratio for an optical disk to be recorded based on product information read from the optical disk. The retrieving part retrieves a second level and a ratio to be used for controlling an optical power level from the table using the optimum second level and the optimum ratio.

The device described above optimizes the ratio of the difference between WRITE level and READ level to the difference between POWERED level and WRITE level or optimize the ratio of the difference between ERASE level and BIAS level to the difference between WRITE level and ERASE level. Accordingly, jitter during reproduction of the optical disks can be reduced.

In a preferred embodiment of the present invention, the optimum value determining-part includes a correspondence table in which an optimum second level and an optimum ratio corresponding to product information of each of various optical disks are prestored. Product information read from an optical disk to be recorded is used for determining an optimum second level and an optimum ratio corresponding to said product information.

With the device including the optimum value determining-part described above, optimum second level and optimum ratio corresponding to product information can be determined in a simple manner with reduced time.

### BRIEF DESCRIPTION OF THE DRAWINGS

Fig. 1 is a diagram showing a waveform of a power level during a recording operation of a write-once-read-many optical disk;
Fig. 2 is a diagram showing a waveform of a power level during a recording operation of a rewritable optical disk;
Fig. 3 is a block diagram showing an embodiment of the optical power level-controlling device of the present invention;
Fig. 4 shows a characteristic curve of a laser diode driver illustrated as plot of output electric current against input voltage;
Fig. 5 shows a characteristic curve of a laser diode illustrated as plot of output power level against input electric current;
Fig. 6 shows a flowchart of an embodiment of a POWERED level-setting process that is executed by an MPU; and
Fig. 7 is a graph showing voltage change at terminal "b" of the laser diode driver.

### DETAILED DESCRIPTION OF THE PREFERRED EMBODIMENTS

In the following, principles and embodiments of the present invention will be described with reference to the accompanying drawings. Reference numerals in parenthesis are indicated by way of example for ease of understanding of the invention and thus by no means limit the scope of the invention to embodiments illustrated in the drawings.

First, an optical power level-controlling device of an optical disk capable of recording data onto a CD-R will be described.

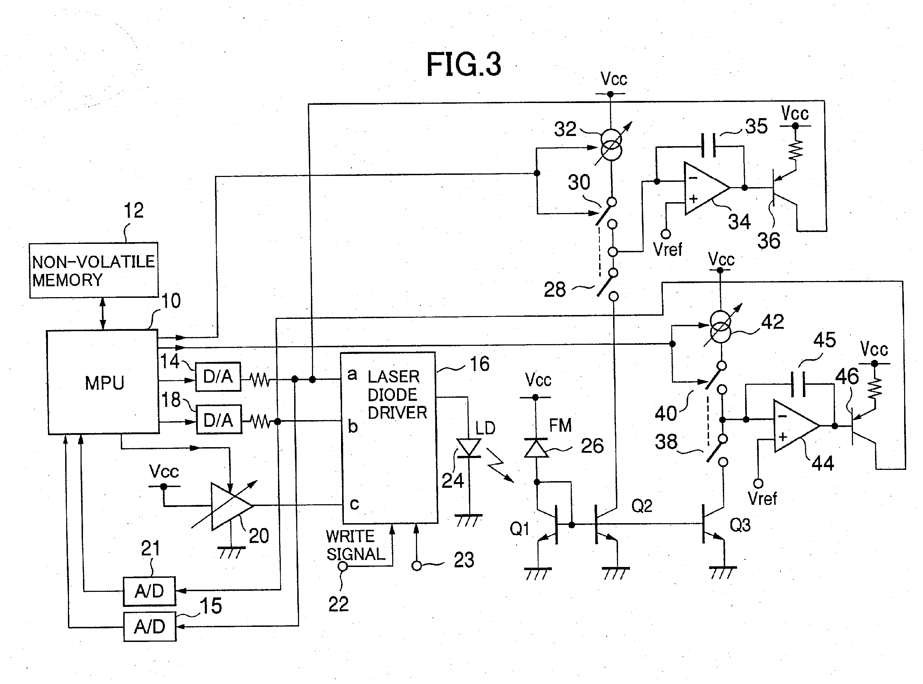

Fig. 3 shows a block diagram of an embodiment of an optical power level-controlling device of the present invention. An MPU 10 controls the entire optical power level-controlling device by making use of a non-volatile memory 12 and other memories not shown in the figure. READ level indication data that is output from the MPU 10 is converted into an analog form at a D/A converter 14 and is supplied to terminal "a" of a laser diode driver 16. Similarly, WRITE level indication data (i.e., DW in Fig. 1) that is output from the MPU 10 is converted into an analog form at a D/A converter 18 and is supplied to terminal "b" of the laser diode driver 16. Further, POWERED level indication data (i.e., DP in Fig. 1) that is output from the MPU 10 is converted into an analog form at a D/A converter 20 and is supplied to terminal "c" of the laser diode driver 16. Voltages at terminals "a" and "b" of the laser diode driver 16 are converted into digital forms at A/D converters 15 and 21, respectively, and supplied to the MPU 10.

The laser diode driver 16 is further provided with a terminal 22 via which modulation signals used for recording are input. In response to the modulation signal, the laser diode driver 16 supplies an electric current to a laser diode 24 such that the laser diode 24 emits light at an optical power level of READ level, WRITE level or POWERED level. The emitted light is irradiated on an optical disk such that data is recorded on the optical disk.

A front monitor 26 detects power level of the laser beam that is output from the laser diode 24. The front monitor 26 may be a photo-diode that supplies a detected electric current corresponding to the detected power level to a collector of an npn transistor Q1. The transistor Q1 and npn transistors Q2 and Q3 constitutes a current mirror circuit in which detected electric currents flowing through collectors of the transistors Q2 and Q3, respectively, have the same value as the detected electric current.

The collector of the transistor Q2 is coupled to a variable current source 32 via mutually interlocked switches 28 and 30. The switches 28 and 30 are operated in accordance with an instruction supplied from the MPU 10 such that they are turned on during the READ level period only. The variable current source 32 supplies a constant electric current having a value determined by the instruction supplied from the MPU 10 to the switches 28 and 30. A connecting point between the switches 28 and 30 is coupled to an inverted input terminal of an operational amplifier 34.

Reference voltage Vref is supplied to a non-inverted input terminal of the operational amplifier 34. The operational amplifier 34 and a capacitor 35 together constitute a mirror integration circuit. An output voltage of the mirror integration circuit is inverted at a pnp transistor 36, superimposed onto an output of the D/A converter 14 and supplied to terminal "a" of the laser diode driver 16.

The READ level indication signal is supplied from the MPU 10 to the laser diode driver 16 via the D/A converter 14 and the laser diode driver 16 supplies an electric current for obtaining READ level to the laser diode 24. An indication signal corresponding to the above-mentioned READ level is supplied from the MPU 10 to the variable current source 32. An output electric current value of the variable current source 32 is, for example, i1.

A feedback control is carried out on the power level of the laser beam emitted by the laser diode 24 in the following manner. When the power level of the laser beam emitted from the laser diode 24 is lower than the indicated READ level, the detected electric current value of the front monitor 26 is smaller than the above-mentioned electric current value i1. Accordingly, an electric current corresponding to the difference between the electric current value i1 and the detected electric current flows in such a manner that electric charge is accumulated in the capacitor 35. This causes a drop of output voltage of the operational amplifier 34 and a rise in the voltage supplied from the pnp transistor 36 to terminal "a" of the laser diode driver 16. Accordingly, the laser diode driver 16 supplies increased amount of electric current to the laser diode 24, such that the power level of the laser beam emitted from the laser diode 24 is increased. When the power level of the laser beam emitted from the laser diode 24 is higher than the indicated READ level, the laser diode driver 16 operates in a reversed manner. The laser diode driver 16 supplies decreased amount of electric current to the laser diode 24. This results in a drop of the power level of the laser beam emitted from the laser diode 24. Thus, the feed back control is achieved.

The collector of the transistor Q3 is coupled to a variable current source 42 via mutually interlocked switches 38 and 40. The switches 38 and 40 operate in accordance with instructions supplied from the MPU 10 such that they are turned on during the WRITE level periods only. The variable current source 42 supplies a constant electric current having a value determined by the instructions supplied from the MPU 10 to the switches 38 and 40. A connecting point between the switches 38 and 40 is coupled to an inverted input terminal of an operational amplifier 44.

Reference voltage Vref is supplied to a non-inverted input terminal of the operational amplifier 44. The operational amplifier 44 and a capacitor 45 together constitute a mirror integration circuit. An output voltage of the mirror integration circuit is inverted at a pnp transistor 46, added onto an output of the D/A converter 14 and supplied to terminal "a" of the laser diode driver 16.

Here, the WRITE level indication signal is supplied from the MPU 10 to the laser diode driver 16 via the D/A converter 18 and the laser diode driver 16 supplies an electric current for obtaining WRITE level to the laser diode 24. Also, an indication signal corresponding to the above-mentioned WRITE level is supplied from the MPU 10 to the variable current source 42 and an output current of the variable current source 42 is, for example, i2.

A feedback control is carried out on the power level of the laser beam emitted by the laser diode 24 in the following manner. When the power level of the laser beam emitted from the laser diode 24 is lower than the indicated WRITE level, the detected electric current value of the front monitor 26 is smaller than the above-mentioned electric current value i2. Accordingly, an electric current corresponding to the difference between the electric current value i2 and the detected electric current flows in such a manner that electric charge is accumulated in the capacitor 45. This causes a drop of output voltage of the operational amplifier 44 and a rise in the voltage supplied from the pnp transistor 46 to terminal "b" of the laser diode driver 16. Accordingly, the laser diode driver 16 supplies increased amount of electric current to the laser diode 24, such that the power level of the laser beam emitted from the laser diode 24 is be increased. When the power level of the laser beam emitted from the laser diode 24 is higher than the indicated WRITE level, the laser diode driver 16 operates in a reversed manner. The laser diode driver 16 supplies decreased amount of electric current to the laser diode 24. This results in a drop of the power level of the laser beam emitted from the laser diode 24. Thus, the feed back control is achieved.

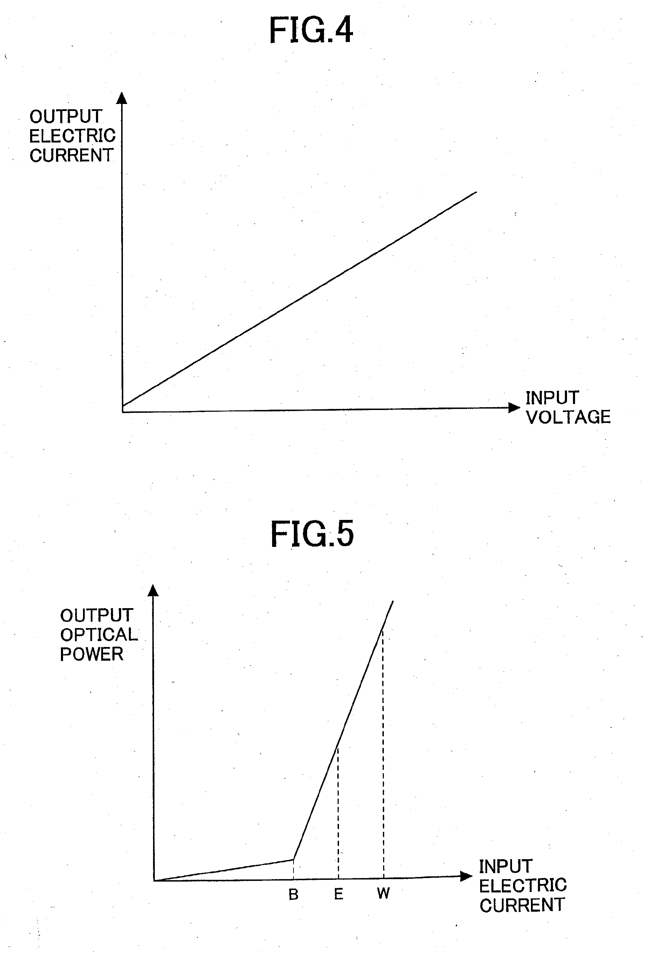

Fig. 4 shows an example of a characteristic curve of output current against input voltage at terminal "b" of the laser diode driver 14 and Fig. 5 shows an example of a characteristic curve of output power level against input electric current of the laser diode 24. On the characteristic curve of output power level against input electric current of the laser diode shown in Fig. 5, "B" indicates READ level, "E" indicates WRITE level and "W" indicates POWERED level.

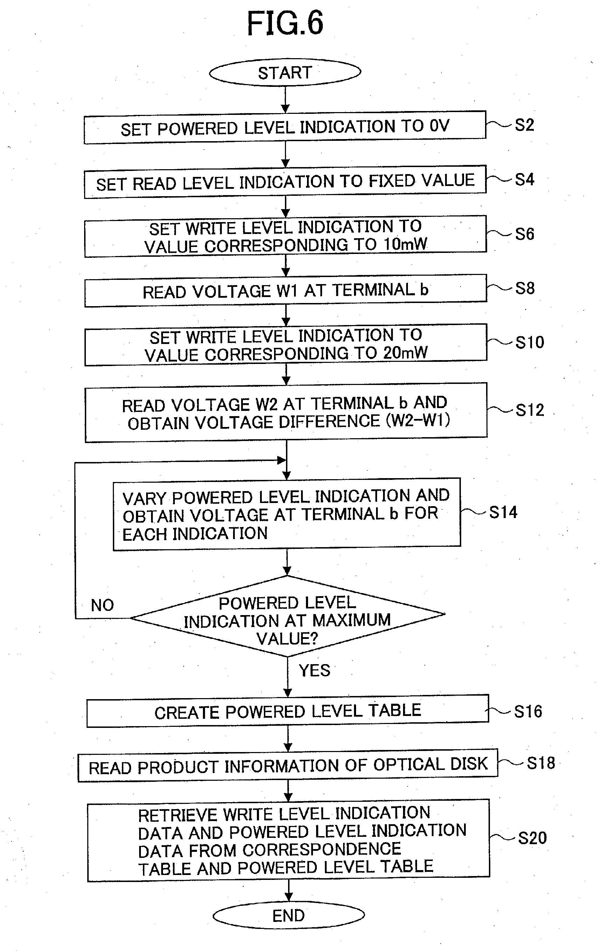

Fig. 6 is a flowchart of an embodiment of a POWERED level-setting process that is performed by the MPU 10 of the device of the present invention. This process may be performed upon loading of an optical disk into an optical disk device and at predetermined intervals thereafter.

As shown in Fig. 6, in step S2, the MPU 10 produces a POWERED level indication data. As a result of the POWERED level indication data, an output of the D/A converter 20 is set at 0V, the variable current source 32 is set to a predetermined value and the switches 28 and 30 are switched on to perform feedback control of the READ level (it is necessary that it exceeds input current level B in Fig. 5). Then, voltage at terminal "a" of the laser diode driver 16 is obtained by the A/D converter 15 and the obtained value is used as a fixed value in step S4. In step S4, the MPU 10 generates a READ level indication data for setting the output of the D/A converter 14 to the above-mentioned fixed value (it is necessary that it exceeds the input electric current level B in Fig. 5). While outputting the fixed value from the D/A converter 14, the switches 28 and 30 should be switched off. In step S6, the WRITE level indication data is used for setting the variable current source 42 to a first value (for example, a value corresponding to the output power 10 mW of the laser diode). Then, in step S8, the voltage at terminal "b" of the laser diode driver 16 is read from the A/D converter 21 and stored as voltage W1.

Then, in step S10, the MPU 10 generates a WRITE level indication data for setting the output of the D/A converter 18 to a second value (e.g., a value corresponding to the output light power 20 mW of the laser diode).

Then, in step S12, the voltage at terminal "b" of the laser diode driver 16 is read from the A/D converter 21 and stored as voltage W2. Then, a voltage difference (W2-W1) corresponding an increased amount 10 mW of the output optical power level is derived.

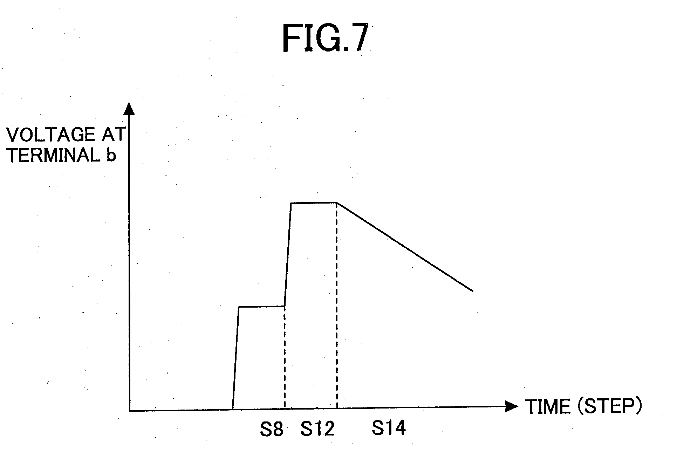

In step S14, the POWERED level indication data that is supplied to the A/D converter 20 is sequentially increased from the lowest value towards the highest value. In this manner, the voltage at terminal "b" of the laser diode driver 16 is read from the A/D converter 21 for each value of the POWERED level indication data and is stored. When the POWERED level indication data is sequentially increased from the lowest value towards the highest value in a manner described above, a feedback control is performed and thus the voltage at terminal "b" gradually decreases. Fig. 7 is a graph showing voltage change at terminal "b" of the laser diode driver for steps S2 through S14. Thus, the change in voltage at terminal "b" corresponding to the POWERED level indication data can be obtained, i.e., it is possible to obtain the change of the output power measured in mW.

Then, in step S16, using the relationship between the voltage difference (W2-W1) and the change in power (mW) of the output power corresponding to each value of the POWERED level indication data, the actual WRITE level is for example set in a step-by-step manner from 10 mW to 20 mW. The corresponding WRITE level indication data (correspond to DW) is obtained for each actual WRITE level. Further, for each actual WRITE level, a ratio DW/DP of the difference between WRITE level and READ level DW to the difference between POWERED level and WRITE level DP is changed in a step-by-step manner within a range of about 10% to 15%. In this manner, the POWERED level indication data (corresponds to DP) corresponding to each of the ratio DW/DP is derived and is stored in a POWERED level table in an internal memory (volatile memory) of the MPU 10.

In step S18, the MPU 10 reads out product information (e.g., manufacturer ID) of the optical disk from the loaded optical disk. It is to be noted that a look-up table showing correspondence between optimum WRITE level and optimum ratio DW/DP for each product information of the optical disk is prestored in the non-volatile memory 12. In step S20, the MPU 10 uses the product information of the optical disk to refer to the look-up table to obtain the optimum WRITE level and the optimum ratio DW/DP. The optimum WRITE level and the optimum ratio DW/DP are used to refer to the POWERED level table to obtain the WRITE level indication data and the POWERED level indication data used for actual recording.

Thus, a recording operation of this optical disk can be performed with the optimum WRITE level corresponding to the recording characteristic of the loaded optical disk (CD-R) and the corresponding POWERED level. Therefore, it is possible to reduce jitter during reproduction of the optical disk.

According to the present invention, WRITE level indication data (corresponds to DW) is derived for each of the actual WRITE level and the ratio DW/DP of the difference DP between the WRITE level and the READ level to the difference DP between the POWERED level and the WRITE level is varied within a range of approximately 10% to 15% in a step-by-step manner to obtain the POWERED level indication data (corresponds to DP) to create the POWERED level table. Therefore, even if there is a change of environmental temperature or there is an aging of elements such as the laser diode 24 and front monitor 26, the WRITE level indication data and the POWERED level indication data for obtaining the actual WRITE level and the actual POWERED level can be obtained in a high accuracy. Therefore, light level control can be performed with an improved accuracy.

The present invention can be applied to the optical power level-controlling device of the optical disk device for performing a recording operation of CD-RWs. In such a case, in Figs. 3 and 6, "READ level", "WRITE level" and "POWERED level" should be replaced by "BIAS level", "ERASE level", and "WRITE level", respectively. In this manner, a recording operation of the optical disk can be performed with the optimum erase level corresponding to the recording characteristic of the loaded optical disk (CD-RW) and corresponding optimum WRITE level. Therefore, the reproducing operation can be performed with reduced jitter.

Further, the present invention is not limited to these embodiments, and variations and modifications may be made without departing from the scope of the present invention.

The present application is based on Japanese priority application No. 2002-044511 filed on February 21, 2002, the entire contents of which are hereby incorporated by reference.

## Claims

1. An optical power level-controlling device (10) for controlling optical power level of a laser beam emitted from a light-emitting element (24) and irradiated on an optical disk, said optical power level capable of taking a first level defined as a reference level, a second level higher than said first level and a third level higher than said second level, a second level indication data being defined as a difference between said second level and said first level and a third level indication data being defined as a difference between said third level and said second level, **characterised in that** said device comprises:
a table-creating part for creating a table containing second level indication data for each of said second levels varied in a stepped manner and containing third level indication data for each of ratios of said second level indication data to said third level indication data, said ratio being varied in a stepped manner;
an optimum value-determining part for determining an optimum second level and an optimum ratio. for an optical disk to be recorded based on product information read from said optical disk; and
a retrieving part for retrieving a second level and a ratio to be used for controlling an optical power level from said table using said optimum second level and said optimum ratio and using said retrieved second level and said retrieved ratio for controlling optical power level of a laser beam.

2. The optical power level-controlling device (10) as claimed in claim 1, **characterised in that** said optimum value determining-part comprises a correspondence table in which an optimum second level and an optimum ratio corresponding to product information of each of various optical disks are prestored, and product information read from an optical disk to be recorded is used for determining an optimum second level and an optimum ratio corresponding to said product information.
